# EUROPEAN PATENT APPLICATION

(11) **EP 4 708 063 A1**
(43) Date of publication of application: **11.03.2026**
(21) Application number: 24818254.5
(22) Date of filing: 31.01.2024
(51) Int. Cl.: G06F 16/182

(54) **FILE ATTRIBUTE SETTING METHOD AND APPARATUS**

(30) Priority: 08.06.2023 CN 202310677768; 15.09.2023 CN 202311199286
(71) Applicant: Huawei Technologies Co., Ltd., Shenzhen, Guangdong 518129 (CN)
(72) Inventor: ZHANG, Mingqian, Shenzhen, Guangdong 518129 (CN); YANG, Jing, Shenzhen, Guangdong 518129 (CN)
(74) Representative: Pfenning, Meinig & Partner mbB
(86) International application number: PCT/CN2024/074942
(87) International publication number: WO 2024/250716

(57) **Abstract**

This application discloses a file attribute setting method, to improve file attribute setting efficiency of a network attached storage NAS server. The method in embodiments of this application includes: The network attached storage NAS server receives an attribute setting request sent by a client, where the attribute setting request indicates a target directory and a target attribute, the target directory includes a plurality of objects, and the objects are files or subdirectories. The NAS server performs attribute setting on the plurality of objects in the target directory based on the target attribute, where the target attribute includes one or more of the following: an owner attribute, a read-only attribute, a hidden attribute, a time attribute, and a permission attribute. The NAS server sends a response message for the attribute setting request to the client.

## Description

This application claims priority to Chinese Patent Application No. 202310677768.1, filed with the China National Intellectual Property Administration on June 8, 2023 and entitled "NAS OPERATION METHOD FOR SETTING FILE ATTRIBUTES IN BATCHES", which is incorporated herein by reference in its entirety.

This application claims priority to Chinese Patent Application No. 202311199286.6, filed with the China National Intellectual Property Administration on September 15, 2023 and entitled "FILE ATTRIBUTE SETTING METHOD AND APPARATUS ", which is incorporated herein by reference in its entirety.

### TECHNICAL FIELD

This application relates to the computer field, and in particular, to a file attribute setting method and apparatus.

### BACKGROUND

With the development of internet technologies, a network file system (NFS) plays an important role in distributed computing, cloud storage, data sharing, and the like. The network file system is a network protocol used to share files and file systems, and allows files and directories to be shared between different hosts.

In the network file system, a user may set attributes of directories and files in a network attached storage (NAS) server via a client. Currently, when the user sets the attributes of the directories and the files in the network attached storage server via the client, the user needs to separately perform an attribute setting operation on the directories and the files in the network attached storage server. In other words, the client needs to first perform a query operation on a to-be-set directory or file, and then perform attribute setting on the queried file or directory.

Therefore, currently, when the user needs to perform attribute setting on a large quantity of directories or files in the network attached storage server, the user needs to send a large quantity of query requests and attribute setting requests via the client. Consequently, attribute setting efficiency of the network attached storage server is low, and a large quantity of network resources are consumed due to the large quantity of attribute setting requests.

### SUMMARY

This application provides a file attribute setting method. In the method, a NAS server can perform, based on an attribute setting request sent by a NAS client, batch attribute setting on files and subdirectories in a target directory, so that file attribute setting efficiency of the NAS server is improved. This application further provides a file attribute setting apparatus, a computing device, a computing device cluster, a computer-readable storage medium, and a computer program product that correspond to the file attribute setting method.

According to a first aspect, this application provides a file attribute setting method. The method may be performed by a network attached storage NAS server, may be performed by a component of the NAS server, for example, a processor, a chip, or a chip system of the NAS server, or may be implemented by a logical module or software that can implement all or a part of functions of the NAS server. The method provided in the first aspect includes: The network attached storage NAS server receives an attribute setting request sent by a client, where the attribute setting request indicates a target directory and a target attribute, the target directory includes a plurality of objects, and the objects are files or subdirectories. The subdirectory is, for example, a folder. The NAS server performs attribute setting on the plurality of objects in the target directory based on the target attribute, where the target attribute includes one or more of the following: an owner attribute, a read-only attribute, a hidden attribute, a time attribute, and a permission attribute. The NAS server sends a response message for the attribute setting request to the client.

In this application, the NAS server can complete batch attribute setting for the plurality of objects in the NAS server based on a single request sent by the NAS client. In comparison with a current case in which the NAS client performs a large quantity of directory query and setting operations (where a setting request needs to be sent for each subdirectory and each file, and the NAS server performs setting for each setting request), in the first aspect of this application, batch attribute setting is performed on the plurality of objects in the target directory based on a batch attribute setting command, so that attribute setting efficiency of the NAS server is improved and network resource consumption is reduced. The plurality of objects herein include a plurality of files, a plurality of directories, or a set of files and directories.

In a possible implementation, a quantity of the objects on which the NAS server performs attribute setting based on the target attribute is less than a total quantity of objects in the target directory. In other words, the NAS server may alternatively perform attribute setting only on a part of the objects in the target directory based on the target attribute. Specifically, the NAS server determines an attribute setting range, and performs attribute setting on a plurality of objects in the attribute setting range based on the target attribute.

In this application, the NAS server can perform batch attribute setting on a part of directories and files in the target directory. In other words, the NAS server can perform attribute setting on files or directories based on a setting range of batch attribute setting, so that flexibility of the NAS server in batch attribute setting is improved.

In a possible implementation, the NAS client can preset an attribute setting range in the NAS server. Specifically, the NAS client configures an attribute inheritance relationship between different objects in the NAS server. The attribute inheritance relationship includes an inheritance relationship between a higher-level directory and a lower-level directory and an inheritance relationship between the higher-level directory and a file. The NAS server determines the attribute setting range based on the configured attribute inheritance relationship.

In this application, the NAS server can determine the attribute setting range based on an attribute inheritance relationship between different levels of directories, and performs batch attribute setting only on directories and files in the attribute setting range, so that the flexibility of the NAS server in batch attribute setting is improved.

In a possible implementation, the attribute setting request further indicates attribute setting manners of the plurality of objects to the NAS server, and the attribute setting manners include a synchronous setting manner and an asynchronous setting manner. In the synchronous setting manner, the NAS server needs to return a response message for the attribute setting request within corresponding setting time.

In this application, the NAS client can indicate, by using the attribute setting request, the attribute setting manners of the plurality of objects in the target directory to the NAS server, so that richness of setting manners of batch attribute setting is improved.

In a possible implementation, a setting manner of the attribute setting request is synchronous setting. When the NAS server completes attribute setting for the plurality of objects in the target directory within setting time, the response message indicates, to the client, that attribute setting is completed. In this case, the response message includes attribute setting results.

In this application, in a synchronous setting process of batch attribute setting between the NAS client and the NAS server, when the NAS server completes batch attribute setting within the setting time corresponding to the synchronous setting manner, the NAS server can indicate, to the NAS server by using the response message, that attribute setting is completed. In this way, reliability of the response message in the synchronous setting manner is improved.

In a possible implementation, a setting manner of the attribute setting request is synchronous setting. When the NAS server does not complete attribute setting for the plurality of objects in the target directory within setting time, the response message indicates an attribute setting exception to the client. In this case, the response message includes a task identifier, verification information, and an error code. The task identifier indicates the target directory on which batch attribute setting is performed, the verification information indicates, to the NAS client, check information required for a synchronous query request, and the error code indicates the attribute setting exception.

In this application, in the synchronous setting process of batch attribute setting between the NAS client and the NAS server, when the NAS server does not complete batch attribute setting within the setting time corresponding to the synchronous setting manner, the NAS server can indicate, to the NAS server by using the response message, that attribute setting is completed. In this way, accuracy of the response message in the synchronous setting manner is improved.

In a possible implementation, the setting manner of the attribute setting request is synchronous setting. When the NAS server does not complete attribute setting for the plurality of objects in the target directory within the setting time, the NAS server receives a synchronous query request sent by the client, generates a query response message based on the synchronous query request sent by the client, and sends the query response message to the client. The synchronous query request is used to query for attribute setting results of the plurality of objects in the target directory.

In this application, in the synchronous setting manner, when receiving the response message indicating the attribute setting exception, the NAS client may send the synchronous query request to the NAS server to query for a result of batch attribute setting performed by the NAS server. In this way, the attribute setting efficiency of the NAS server is improved and the network resource consumption is reduced.

In a possible implementation, a setting manner of the attribute setting request is asynchronous setting, and the response message indicates an attribute setting exception to the client. In this case, the response message includes a task identifier, verification information, and an error code. The task identifier indicates the target directory, the verification information indicates check information for the response message to the NAS client, and the error code indicates the attribute setting exception. After receiving the response message, the NAS client starts an asynchronous message receiving task based on the response message.

In this application, in the asynchronous setting manner, after receiving the attribute setting request, the NAS server directly sends the response message indicating the attribute setting exception to the NAS server, to notify the NAS server to start the asynchronous message receiving task. In this way, the attribute setting efficiency of the NAS server is improved and the network resource consumption is reduced.

In a possible implementation, the setting manner of the attribute setting request is asynchronous setting. When the NAS server completes attribute setting for the plurality of objects in the target directory, the NAS server actively sends an asynchronous message to the client, where the asynchronous message indicates, to the client, that attribute setting is completed.

In this application, in the asynchronous setting manner, after completing batch attribute setting, the NAS server can send the asynchronous message to the NAS client, to notify the NAS server that batch attribute setting is completed. In this way, the attribute setting efficiency of the NAS server is improved and the network resource consumption is reduced.

In a possible implementation, when a task session in which the attribute setting request is located is destroyed, the NAS server stops attribute setting for the plurality of objects in the target directory. In the asynchronous setting manner, the asynchronous message receiving task of the NAS client is also forcibly terminated as the task session is destroyed.

In this application, when the task session in which the attribute setting request is located is destroyed, the NAS server can stop attribute setting for the plurality of objects in the target directory, so that applicability of the attribute setting method in this application in a specific scenario can be improved.

In a possible implementation, the permission attribute includes one or more of the following: read permission, write permission, delete permission, modify permission, and full control permission.

In this application, the NAS server can perform, based on the attribute setting request, batch attribute setting on different permission attributes of the plurality of objects in the target directory in the NAS server, so that an application range of permission attribute setting performed by the NAS server can be enlarged.

In a possible implementation, the NAS server receives, over a network, the attribute setting request sent by the client.

In this embodiment of this application, the NAS server receives the attribute setting request over the network, to perform batch attribute setting on subdirectories and files in the target directory, so that the network resource consumption is reduced.

According to a second aspect, this application provides a file attribute setting apparatus. The apparatus includes a transceiver unit and a processing unit. The transceiver unit is configured to receive an attribute setting request sent by a client, where the attribute setting request indicates a target directory and a target attribute, the target directory includes a plurality of objects, and the objects are files or subdirectories.

The processing unit is configured to perform attribute setting on the plurality of objects in the target directory based on the target attribute, where the target attribute includes one or more of the following: an owner attribute, a read-only attribute, a hidden attribute, a time attribute, and a permission attribute. The transceiver unit is further configured to send a response message for the attribute setting request to the client.

In a possible implementation, the processing unit is further configured to: a quantity of the objects on which attribute setting is performed based on the target attribute is less than a total quantity of objects in the target directory.

In a possible implementation, a setting manner of the attribute setting request is synchronous setting. When a NAS server completes attribute setting for the plurality of objects in the target directory within setting time, the response message indicates, to the client, that attribute setting is completed.

In a possible implementation, the setting manner of the attribute setting request is synchronous setting. When a NAS server does not complete attribute setting for the plurality of objects in the target directory within setting time, the response message indicates an attribute setting exception to the client.

In a possible implementation, the setting manner of the attribute setting request is synchronous setting. When the NAS server does not complete attribute setting for the plurality of objects in the target directory within the setting time, the transceiver unit is further configured to send a query response message to the client based on a synchronous query request sent by the client, where the synchronous query request is used to query for attribute setting results of the plurality of objects in the target directory.

In a possible implementation, a setting manner of the attribute setting request is asynchronous setting, and the response message indicates an attribute setting exception to the client.

In a possible implementation, the setting manner of the attribute setting request is asynchronous setting. The transceiver unit is further configured to: when a NAS server completes attribute setting for the plurality of objects in the target directory, actively send an asynchronous message to the client, where the asynchronous message indicates, to the client, that attribute setting is completed.

In a possible implementation, the processing unit is further configured to: when a task session in which the attribute setting request is located is destroyed, stop attribute setting for the plurality of objects in the target directory.

In a possible implementation, the permission attribute includes one or more of the following: read permission, write permission, delete permission, modify permission, and full control permission.

In a possible implementation, the transceiver unit is specifically configured to receive, over a network, the attribute setting request sent by the client.

According to a third aspect, this application provides a computing device, where the computing device includes a processor, the processor is coupled to a memory, and the processor is configured to store instructions. When the instructions are executed by the processor, the computing device is enabled to perform the method according to any one of the first aspect or the possible implementations of the first aspect.

According to a fourth aspect, this application provides a computing device cluster, where the computing device cluster includes one or more computing devices. A computing device includes a processor, the processor is coupled to a memory, and the processor is configured to store instructions. When the instructions are executed by the processor, the computing device cluster is enabled to perform the method according to any one of the first aspect or the possible implementations of the first aspect.

According to a fifth aspect, this application provides a computer-readable storage medium, storing instructions, where when the instructions are executed, a computer is enabled to perform the method according to any one of the first aspect or the possible implementations of the first aspect.

According to a sixth aspect, this application provides a computer program product, where the computer program product includes instructions. When the instructions are executed, a computer is enabled to implement the method according to any one of the first aspect or the possible implementations of the first aspect.

It may be understood that, for beneficial effects that can be achieved by any one of the file attribute setting apparatus, the computing device, the computing device cluster, the computer-readable medium, the computer program product, or the like provided above, refer to beneficial effects in the corresponding method. Details are not described herein again.

### BRIEF DESCRIPTION OF DRAWINGS

FIG. 1 is a diagram of a system architecture of a network file system according to an embodiment of this application;
FIG. 2 is a schematic flowchart of a file attribute setting method according to an embodiment of this application;
FIG. 3 is a schematic flowchart of file attribute setting in a synchronous setting manner according to an embodiment of this application;
FIG. 4 is a schematic flowchart of file attribute setting in an asynchronous setting manner according to an embodiment of this application;
FIG. 5 is a diagram of a file attribute setting apparatus according to an embodiment of this application;
FIG. 6 is a diagram of a structure of a computing device according to an embodiment of this application; and
FIG. 7 is a diagram of a structure of a computing device cluster according to an embodiment of this application.

### DESCRIPTION OF EMBODIMENTS

Embodiments of this application provide a file attribute setting method and apparatus, to improve attribute setting efficiency of a network attached storage server.

In the specification, the claims, and the accompanying drawings of this application, the terms "first", "second", "third", "fourth", and the like (if existent) are intended to distinguish between similar objects but do not necessarily describe a specific order or sequence. It should be understood that data termed in such a way are interchangeable in appropriate circumstances so that embodiments described herein can be implemented in other orders than the order illustrated or described herein. In addition, the terms "include" and "have" and any other variants thereof are intended to cover a non-exclusive inclusion. For example, a process, a method, a system, a product, or a device that includes a series of steps or units is not necessarily limited to those expressly listed steps or units, but may include other steps or units not expressly listed or inherent to such a process, method, product, or device.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the words such as "example" or "for example" is intended to present a relative concept in a specific manner.

First, some terms in embodiments of this application are described, to help a person skilled in the art understand the technical solutions.

A network file system (network file system, NFS) is a system that allows different hosts to share files and directories. The NFS works by using a client-server model, and a client may access a file and a directory in a server through an interface. The NFS may be used in a Unix system and a Linux system, and provides file sharing and data access capabilities. The NFS allows a plurality of users to simultaneously access a shared file, and supports read, write, and execute operations on the file.

A network attached storage (network attached storage, NAS) server is a storage device that is specially designed to store and share data. The NAS server is connected to a computer network and runs a file system and a related service. The NAS server may exist independently, or may be used as a component of a storage server or a storage array. The NAS server provides simplified file access and sharing over the network, and allows a plurality of users to access and share a stored file and stored data on the network.

The following describes a file attribute setting method and apparatus provided in embodiments of this application with reference to the accompanying drawings. First, a system architecture to which the file attribute setting method provided in an embodiment of this application is applied is described.

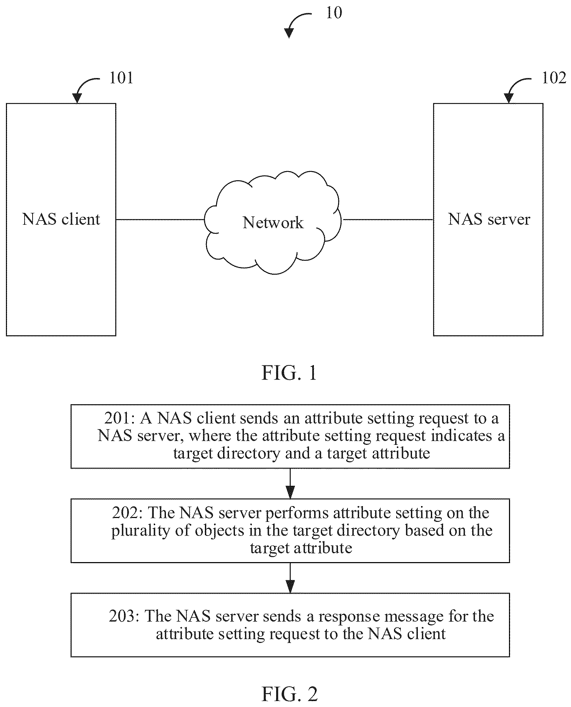

FIG. 1 is a diagram of a system architecture of a network file system according to an embodiment of this application. In the system architecture shown in FIG. 1, the network file system 10 includes a NAS client 101 and a NAS server 102. The following describes specific functions of each part of the network file system 10.

The NAS client 101 is configured to access and operate a file stored in the NAS server 102. Specifically, a user may read, write, and manage the file stored in the NAS server 102 via the NAS client 101. The user may further perform batch attribute setting on directories and files in the NAS server 102 via the NAS client 101. For example, the user sends a batch file attribute setting request to the NAS server 102 via the NAS client 101. The batch file attribute setting request indicates the NAS server 102 to perform attribute setting on subdirectories and files in a target directory based on a target attribute.

The NAS client 101 can further provide a user display interface. The user accesses and manages the file in the NAS server 102 based on the user display interface provided by the NAS client 101. The user may further perform functions such as file searching, file synchronization, file backup, and file version control through the user display interface provided by the NAS client 101.

It should be noted that the NAS client 101 may be a software client installed on terminal devices such as a computer, a mobile phone, or a tablet computer, or may be an independent hardware client device. This is not specifically limited.

The NAS server 102 is configured to provide a file storage service for the NAS client 101. For example, the NAS server 102 allows the user to store, via the NAS client 101, a file in a memory inside the server, and share, over a network, the file with another NAS client connected to the same network. The NAS server 102 can further provide services such as file searching, file synchronization, file backup, and file version control.

The NAS server 102 is further configured to perform batch setting on file attributes based on the batch file attribute setting request sent by the NAS client 101. Specifically, the NAS server 102 performs, based on the target directory and the target attribute that are carried in the batch file attribute setting request, attribute setting on the subdirectories and files in the target directory in the NAS server 102 based on the target attribute.

It should be noted that communication between the NAS client 101 and the NAS server can be implemented by using a plurality of protocols. The plurality of protocols are, for example, a server message block (server message block, SMB) protocol and a network file system (network file system, NFS) protocol. The SMB protocol is applied to a Windows system, and the NFS protocol is applied to a Linux or Unix system. The NAS client and the NAS server in the SMB protocol may also be respectively referred to as an SMB client and an SMB server, and the NAS client and the NAS server in the NFS protocol may also be respectively referred to as an NFS client and an NFS server.

The following describes, based on the network file system shown in FIG. 1, a file attribute setting method provided in an embodiment of this application.

FIG. 2 is a schematic flowchart of a file attribute setting method according to an embodiment of this application. In the example shown in FIG. 2, the file attribute setting method provided in this embodiment of this application includes the following steps.

201: A NAS client sends an attribute setting request to a NAS server, where the attribute setting request indicates a target directory and a target attribute.

The NAS client 101 sends the attribute setting request to the NAS server 102. The attribute setting request is a batch file attribute setting request. The attribute setting request includes the target directory and the target attribute. The attribute setting request is used to request batch attribute setting on a plurality of objects in the target directory in the NAS server 102. The target directory indicates a directory on which attribute setting is to be performed in the NAS server 102, and the target attribute indicates an attribute to set to.

In the NAS server 102, the target directory includes one or more objects. The object includes a subdirectory and a file. The subdirectory is, for example, a folder in the NAS server 102 (where the directory in this embodiment of this application includes, for example, a directory in Linux, or a folder in a Windows system). It may be understood that the subdirectory may also include a next-level subdirectory and a file in the subdirectory.

The target attribute includes one or more of the following: a file owner attribute, a read-only attribute, a hidden attribute, a time attribute, and a permission attribute. The file owner attribute is used to identify ownership of a file. In most operating systems, the file owner attribute is defined and managed by a user or a user group. The read-only attribute marks a file as readable but not modifiable. In other words, a user may view content of a file, but cannot edit or delete the file. The read-only attribute can ensure integrity of the file and prevent unexpected change.

The hidden attribute may specify a hidden state of a file or a directory. The hidden attribute is usually used to hide a system file or a sensitive file. The time attribute specifies different timestamps of a file, including creation time, modification time, and access time. The creation time indicates a date and time when the file is created. The modification time indicates a date and time when the file is edited or modified for the last time. The access time indicates a date and time when the file is accessed for the last time.

The permission attribute is used to specify an access permission level of a file and a directory. The permission attribute determines operation permission of different users or user groups on the file and the directory. The permission attribute includes one or more of the following: read permission, write permission, delete permission, modify permission, and full control permission.

In a possible implementation, the attribute setting request sent by the NAS client 101 to the NAS server 102 includes one or more command words. Specifically, the attribute setting request sent by the NAS client 101 to the NAS server 102 includes a SETATTR command word, and the SETATTR command word is used to set attributes of the file and the subdirectory in the target directory. Parameters in the SETATTR command word exist in a form of a key-value pair, where a key indicates an attribute to be modified, and a value indicates a new value to set to.

For example, when the NAS client 101 requests, by using the SETATTR command word, to change owner attributes of the plurality of objects in the target directory, the SETATTR command word is "SETATTR (directory, owner=new owner)". For another example, when the NAS client 101 requests, by using the SETATTR command word, to change read-only attributes of the plurality of objects in the target directory, the SETATTR command word is "SETATTR (directory, permissions=read only)".

In a possible implementation, the attribute setting request further indicates setting manners of batch attribute setting, and the setting manners include a synchronous setting manner and an asynchronous setting manner. Specifically, the attribute setting request may further include a PATH SET command word, and the PATH SET command word indicates the attribute setting manner. When an isSync field in the PATH SET command word is true, the setting manner indicated by the PATH SET command word is the synchronous setting manner. When an isSync field is false, the setting manner indicated by the PATH SET command word is the asynchronous setting manner.

202: The NAS server performs attribute setting on the plurality of objects in the target directory based on the target attribute.

After the NAS server 102 receives the attribute setting request sent by the client 101, the NAS server 102 performs, based on the attribute setting request, attribute setting on the plurality of objects in the target directory based on the target attribute. The plurality of objects in the target directory include subdirectories and files. The NAS server 102 can perform batch attribute setting on the plurality of subdirectories and files in the target directory based on the target attribute. In other words, the NAS server 102 sets attributes of the plurality of subdirectories and files in the target directory to the target attribute.

For example, in an example of step 202, the NAS server 102 receives the attribute setting request sent by the client 101. The target directory of the attribute setting request is "directory 1", and target attributes are "read-only" and "owner 1". The NAS server 102 sets, based on the attribute setting request, read-only attributes of all objects in the target directory to "read-only", and modifies owner attributes of all the objects in the target directory to "owner 1" based on the target attributes.

In a possible implementation, a quantity of the objects on which the NAS server 102 performs attribute setting based on the target attribute is less than a total quantity of objects in the target directory. In other words, the NAS server 102 may alternatively perform attribute setting only on a part of objects in the target directory based on the target attribute. Specifically, the NAS server 102 determines an attribute setting range for performing batch attribute setting. The attribute setting range indicates files and directories on which attribute setting needs to be performed. The NAS server 102 performs attribute setting on a plurality of objects in the attribute setting range based on the target attribute.

For example, in an example of step 202, the attribute setting range determined by the NAS server 102 includes a subdirectory and a file in the target directory, and a third-level directory and a file in the subdirectory. Therefore, the NAS server 102 performs, based on the target attribute, attribute setting on the subdirectory and the file, and the third-level directory and the file in the subdirectory that are in the attribute setting range.

It should be noted that the NAS client 101 can preset the attribute setting range in the NAS server 102. Specifically, the NAS client 101 configures an attribute inheritance relationship between different objects in the NAS server 102. The attribute inheritance relationship includes an inheritance relationship between a higher-level directory and a lower-level directory and an inheritance relationship between the higher-level directory and a file. The NAS server 102 determines the attribute setting range based on the configured attribute inheritance relationship.

For example, in another example of step 202, the NAS client 101 can preconfigure, in the NAS server 102, that a subdirectory in a target directory inherits an attribute of the target directory, and a file in the target directory inherits the attribute of the target directory. In addition, that a third-level directory in the subdirectory inherits the attribute of the subdirectory, and a file in the subdirectory inherits the attribute of the subdirectory is configured. In addition, it is configured in such a manner that a fourth-level directory and a file in the third-level directory do not inherit the attribute of the third-level directory. Therefore, through the configuration of the foregoing attribute inheritance relationship, the NAS server 102 can determine, based on the attribute inheritance relationship, that an attribute setting range includes the subdirectory and the file in the target directory, and the third-level directory and the file in the subdirectory.

203: The NAS server sends a response message for the attribute setting request to the NAS client.

The NAS server 102 performs batch attribute setting on the target directory based on the attribute setting request, and sends the response message for the attribute setting request to the NAS client 101. Because the setting manners indicated by the attribute setting request include the synchronous setting manner and the asynchronous setting manner, the NAS server 102 sends, to the NAS client 101, different response messages for attribute setting requests indicating different attribute setting manners.

When the setting manner is the synchronous setting manner, after the NAS server 102 receives the attribute setting request, if the NAS server 102 completes attribute setting for the plurality of objects in the target directory within setting time, the response message for the attribute setting request indicates, to the NAS client 101, that attribute setting is completed. If the NAS server 102 does not complete attribute setting for the plurality of objects in the target directory within setting time, the response message for the attribute setting request indicates an attribute setting exception to the client. After the NAS server 102 sends the response message for the attribute setting request to the NAS client 101, the NAS client 101 needs to send a synchronous query request to the NAS server 102 to obtain attribute setting results.

When the setting manner is the asynchronous setting manner, after the NAS server 102 receives the attribute setting request, the NAS server 102 directly sends the response message for the attribute setting request to the NAS client 101. The response message for the attribute setting request indicates an attribute setting exception to the client. After the NAS server 102 sends the response message for the attribute setting request to the NAS client 101, and after completing attribute setting, the NAS server 102 can send an asynchronous message to the NAS client 101. The asynchronous message indicates that attribute setting is completed.

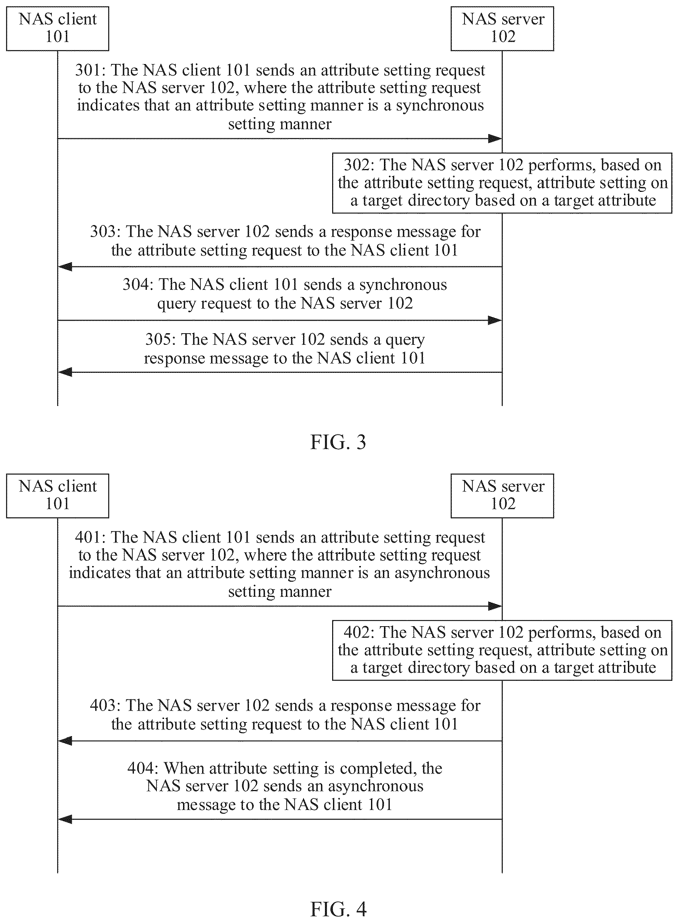

With reference to embodiments shown in FIG. 3 and FIG. 4, the following describes in detail interaction procedures between the NAS client 101 and the NAS server 102 in the synchronous setting manner and the asynchronous setting manner in this embodiment of this application.

FIG. 3 is a schematic flowchart of a file attribute setting method in a synchronous setting manner according to an embodiment of this application. In an example shown in FIG. 3, a procedure of the file attribute setting method provided in this embodiment of this application includes the following steps.

301: A NAS client sends an attribute setting request to a NAS server, where the attribute setting request indicates that an attribute setting manner is a synchronous setting manner.

Steps performed by the NAS client 101 and the NAS server 102 in step 301 in this embodiment are similar to steps performed by the NAS client 101 and the NAS server 102 in step 201 in the embodiment shown in FIG. 2. Details are not described again.

It should be noted that the attribute setting manner indicated by the attribute setting request in step 301 is the synchronous setting manner. For example, an "isSync" field in a PATH SET command word in the attribute setting request is true.

302: The NAS server performs, based on the attribute setting request, attribute setting on a target directory based on a target attribute.

Step 302 in this embodiment is similar to step 202 performed by the NAS server 102 in the embodiment shown in FIG. 2. Details are not described again.

303: The NAS server sends a response message for the attribute setting request to the NAS client.

In the synchronous setting manner, when the NAS server 102 does not complete attribute setting for a plurality of objects in the target directory within setting time, the NAS server 102 sends the response message for the attribute setting request to the NAS client 101. The response message for the attribute setting request indicates an attribute setting exception to the client. In this case, the response message for the attribute setting request includes a task identifier (query ID), verification information (verf), and an error code. The task identifier indicates the target directory on which batch attribute setting is performed. The verification information indicates check information for a synchronous query request to the NAS client, in other words, the NAS server 102 checks a received synchronous query request message based on the verification information. The error code indicates the attribute setting exception.

In an example of the synchronous setting manner in step 303, when the NAS server 102 does not complete attribute setting for the plurality of objects in the target directory within the setting time, the NAS server 102 sends the response message for the attribute setting request to the NAS client 101. In the response message for the attribute setting request, a "query _id" field is the task identifier, a "verf" field is the verification information, and an "NFS4_PENDING" field is the error code.

In the synchronous setting manner, if the NAS server 102 completes attribute setting for the plurality of objects in the target directory within the setting time, the response message for the attribute setting request indicates, to the NAS client 101, that attribute setting is completed. In this case, the response message for the attribute setting request includes attribute setting results.

In another example of the synchronous setting manner in step 303, when the NAS server 102 completes attribute setting for the plurality of objects in the target directory, the NAS server 102 sends the response message to the NAS client 101.

304: The NAS client sends the synchronous query request to the NAS server.

In the synchronous setting manner, after the NAS client 101 receives the response message sent by the NAS server 102, when the response message indicates the attribute setting exception in the NAS server 102, the NAS client 101 periodically sends a synchronous query message to the NAS server 102. The synchronous query request is used to query for an attribute setting result of the target directory. The synchronous query message includes a task identifier (query ID) and verification information (verf). The task identifier and the verification information are the task identifier and the verification information carried in the response message for the attribute setting request.

In an example of step 304, the NAS client 101 sends the synchronous query request to the NAS server 102. A "query _id" field in the synchronous query request message is the task identifier, and a "verf" field is the verification information. The task identifier and the verification information in the synchronous query request is consistent with the task identifier and the verification information in the response message for the attribute setting request.

305: The NAS server sends a query response message to the NAS client.

In the synchronous setting manner, after the NAS server 102 receives the synchronous query request sent by the NAS client 101, the NAS server 102 sends the query response message to the NAS client 101 based on a query result. Specifically, the NAS server 102 compares the task identifier and the verification information in the synchronous query request with a task identifier and verification information cached in the NAS server 102. If the comparison succeeds, the NAS server 102 receives the synchronous query request sent by the NAS client 101. If the comparison fails, the NAS server 102 rejects the synchronous query request sent by the NAS client 101.

After receiving the synchronous query request sent by the NAS client 101, the NAS server 102 sends the query response message to the NAS client 101. If the NAS server 102 completes attribute setting for the plurality of objects in the target directory within the setting time, the query response message indicates, to the NAS client 101, that attribute setting is completed. In this case, the query response message includes the attribute setting results.

In an example of step 305, after the NAS client 101 sends the synchronous query request to the NAS server 102, if the NAS server 102 completes attribute setting for the plurality of objects in the target directory, the NAS server 102 sends the query response message to the NAS client 101.

If the NAS server 102 does not complete attribute setting for the plurality of objects in the target directory within the setting time, the query response message indicates the attribute setting exception to the NAS client 101. In this case, the query response message includes the task identifier (query ID), the verification information (verf), and the error code.

It may be understood that after the NAS client 101 receives the query response message, if the NAS server 102 does not complete attribute setting, the NAS client 101 may continue to send the synchronous query request to the NAS server 102. Specifically, the NAS client 101 may send the synchronous query request to the NAS server 102 again based on the task identifier and the verification information in the query response message.

It can be learned from the embodiment shown in FIG. 3 that in the synchronous setting manner, the NAS client 101 can actively send the synchronous query request to the NAS server 102 to query for a setting result of a file attribute.

FIG. 4 is a schematic flowchart of a file attribute setting method in an asynchronous setting manner according to an embodiment of this application. In an example shown in FIG. 4, a procedure of the file attribute setting method provided in this embodiment of this application includes the following steps.

401: ANAS client sends an attribute setting request to a NAS server, where the attribute setting request indicates that an attribute setting manner is an asynchronous setting manner.

Steps performed by the NAS client 101 and the NAS server 102 in step 401 in this embodiment are similar to steps performed by the NAS client 101 and the NAS server in step 201 in the embodiment shown in FIG. 2. Details are not described again.

It should be noted that the attribute setting manner indicated by the attribute setting request in step 401 is the asynchronous setting manner. For example, an "isSync" field in a PATH SET command word in the attribute setting request is false.

402: The NAS server performs, based on the attribute setting request, attribute setting on a target directory based on a target attribute.

Step 302 in this embodiment is similar to step 202 performed by the NAS server 102 in the embodiment shown in FIG. 2. Details are not described again.

403: The NAS server sends a response message for the attribute setting request to the NAS client.

In the asynchronous setting manner, after the NAS server 102 receives the attribute setting request sent by the client 101, the NAS server 102 directly sends the response message for the attribute setting request to the NAS client 101. The response message indicates an attribute setting exception to the client. In this case, the response message for the attribute setting request includes a task identifier (query ID), verification information (verf), and an error code. The task identifier indicates the target directory. The verification information indicates check information for the response message to the NAS client 101, in other words, the NAS client verifies, based on the verification information, whether an asynchronous message is sent by a corresponding NAS server. The error code indicates the attribute setting exception.

In the asynchronous setting manner, after the NAS server 102 sends the response message for the attribute setting request to the NAS client 101, the NAS server 102 performs, based on the attribute setting request, attribute setting on a plurality of objects in the target directory of the NAS server 102 based on the target attribute. An action of attribute setting performed by the NAS server 102 based on the attribute setting request is similar to the action performed by the NAS server 102 in step 202 in the foregoing embodiment. Details are not described again.

It should be noted that in the asynchronous setting manner, after the NAS client 101 receives the response message sent by the NAS server 102, the NAS client 101 starts an asynchronous message receiving task. The asynchronous message receiving task includes: waiting for the asynchronous message sent by the NAS server 102, and performing matching check on the asynchronous message sent by the NAS server 102.

404: When attribute setting is completed, the NAS server sends the asynchronous message to the NAS client.

In the asynchronous setting manner, after the NAS server 102 completes attribute setting, the NAS server 102 actively sends the asynchronous message to the NAS client 101. The asynchronous message indicates that attribute setting for the plurality of objects in the target directory is completed based on the target attribute. The asynchronous message includes a task identifier (query_id), verification information (verf), and a setting result (status).

It should be noted that after the NAS client 101 receives the asynchronous message sent by the NAS server 102, the NAS client 101 compares the task identifier and the verification information in the asynchronous message with the task identifier and the verification information in the response message previously received by the NAS client 101. If the comparison succeeds, the NAS client 101 determines that attribute setting is complete. If the comparison fails, the NAS client 101 returns the attribute setting exception.

In a possible implementation, when a task session in which the attribute setting request is located is destroyed, the NAS server 102 stops attribute setting for the plurality of objects in the target directory. In the asynchronous setting manner, the asynchronous message receiving task of the NAS client 101 is also forcibly terminated as the task session is destroyed.

It can be learned from the embodiment shown in FIG. 3 that in the asynchronous setting manner, after completing attribute setting, the NAS server 102 actively sends the asynchronous message to the client 101 to notify a batch attribute setting result.

It can be learned from the embodiments shown in FIG. 2 to FIG. 4 that in embodiments of this application, based on a batch attribute setting request, the NAS server can perform batch attribute setting on a plurality of objects in a target directory based on a target attribute, so that attribute setting efficiency of the NAS server is improved and consumption of network resources is reduced.

Based on the foregoing method embodiments, embodiments of this application further provide a file attribute setting apparatus. The following specifically describes the file attribute setting apparatus provided in embodiments of this application.

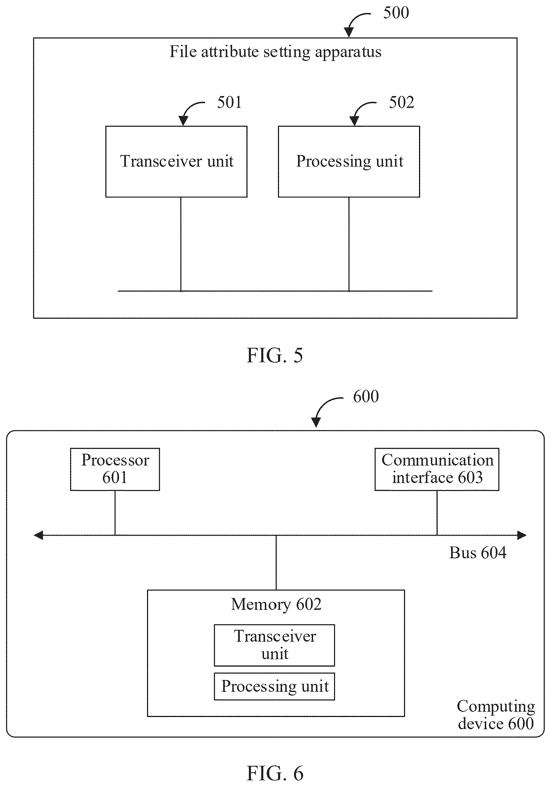

FIG. 5 is a diagram of a structure of a file attribute setting apparatus according to an embodiment of this application. In an example shown in FIG. 5, the file attribute setting apparatus 500 is configured to implement the steps performed by a NAS server in the foregoing embodiments. The file attribute setting apparatus 500 includes a transceiver unit 501 and a processing unit 502.

The transceiver unit 501 is configured to receive an attribute setting request sent by a client, where the attribute setting request indicates a target directory and a target attribute, the target directory includes a plurality of objects, and the objects are files or subdirectories. The processing unit 502 is configured to perform attribute setting on the plurality of objects in the target directory based on the target attribute, where the target attribute includes one or more of the following: an owner attribute, a read-only attribute, a hidden attribute, a time attribute, and a permission attribute. The transceiver unit 501 is further configured to send a response message for the attribute setting request to the client.

In a possible implementation, the processing unit 502 is further configured to: a quantity of the objects on which attribute setting is performed based on the target attribute is less than a total quantity of objects in the target directory.

In a possible implementation, a setting manner of the attribute setting request is synchronous setting. When the NAS server completes attribute setting for the plurality of objects in the target directory within setting time, the response message indicates, to the client, that attribute setting is completed.

In a possible implementation, a setting manner of the attribute setting request is synchronous setting. When the NAS server does not complete attribute setting for the plurality of objects in the target directory within setting time, the response message indicates an attribute setting exception to the client.

In a possible implementation, the setting manner of the attribute setting request is synchronous setting. When the NAS server does not complete attribute setting for the plurality of objects in the target directory within the setting time, the transceiver unit 501 is further configured to send a query response message to the client based on a synchronous query request sent by the client, where the synchronous query request is used to query for attribute setting results of the plurality of objects in the target directory.

In a possible implementation, a setting manner of the attribute setting request is asynchronous setting, and the response message indicates an attribute setting exception to the client.

In a possible implementation, the setting manner of the attribute setting request is asynchronous setting. The transceiver unit 501 is further configured to: when the NAS server completes attribute setting for the plurality of objects in the target directory, actively send an asynchronous message to the client, where the asynchronous message indicates, to the client, that attribute setting is completed.

In a possible implementation, the processing unit 502 is further configured to: when a task session in which the attribute setting request is located is destroyed, stop attribute setting for the plurality of objects in the target directory.

In a possible implementation, the permission attribute includes one or more of the following: read permission, write permission, delete permission, modify permission, and full control permission.

In a possible implementation, the transceiver unit 501 is specifically configured to receive, over a network, the attribute setting request sent by the client.

It should be understood that division of the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. During implementation, steps in the foregoing method or the foregoing units may be implemented by using a hardware integrated logic circuit in a processor element, or may be implemented in the form of software invoked by the processing element.

It should be noted that, for brief description, the foregoing method embodiments are described as a series of actions. However, a person skilled in the art should know that this application is not limited to the described order of the actions. In addition, a person skilled in the art should also know that all embodiments described in this specification are example embodiments, and the related actions are not necessarily mandatory to this application.

Another appropriate step combination that can be figured out by a person skilled in the art according to the content described above also falls within the protection scope of this application. In addition, a person skilled in the art should also be familiar to embodiments described in this specification all belong to example embodiments, and involved actions are not necessarily mandatory in this application.

FIG. 6 is a diagram of a structure of a computing device according to an embodiment of this application. As shown in FIG. 6, the computing device 600 includes a processor 601, a memory 602, a communication interface 603, and a bus 604. The processor 601, the memory 602, and the communication interface 603 are coupled through the bus (not marked in the figure). The memory 602 stores instructions. When execution instructions in the memory 602 are executed, the computing device 600 performs the methods performed by a NAS server in the foregoing method embodiments.

The computing device 600 may be one or more integrated circuits configured to perform the foregoing methods, for example, one or more application-specific integrated circuits (application-specific integrated circuits, ASICs), one or more microprocessors (digital signal processors, DSPs), one or more field-programmable gate arrays (field-programmable gate arrays, FPGAs), or a combination of at least two of these integrated circuit forms. For another example, when the units in the apparatus can be implemented in a form of scheduling a program by the processing element, the processing element may be a general-purpose processor, for example, a central processing unit (central processing unit, CPU) or another processor that may invoke the program. For another example, the units may be integrated and implemented in a form of a system-on-a-chip (system-on-a-chip, SoC).

The processor 601 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 602 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, but not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 602 stores executable program code, and the processor 601 executes the executable program code to separately implement functions of the foregoing transceiver unit 501 and processing unit 502, to implement the file attribute setting method. In other words, the memory 602 stores instructions for performing the file attribute setting method.

The communication interface 603 uses a transceiver module, for example, but not limited to a network interface card or a transceiver, to implement communication between the computing device 600 and another device or a communication network.

The bus 604 may include a power bus, a control bus, a status signal bus, and the like, in addition to a data bus. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

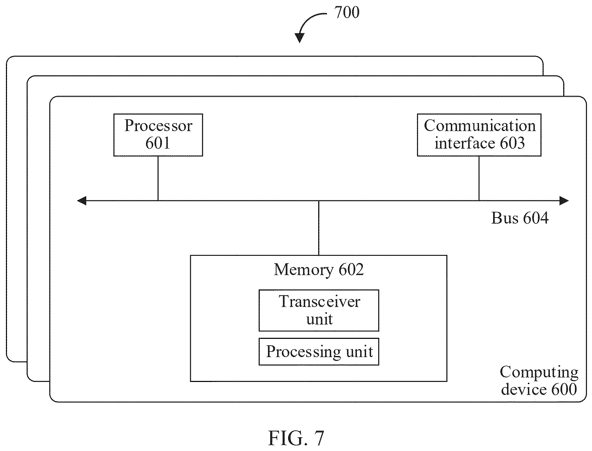

FIG. 7 is a diagram of a computing device cluster according to an embodiment of this application. As shown in FIG. 7, the computing device cluster 700 includes at least one computing device 600.

As shown in FIG. 7, the computing device cluster 700 includes at least one computing device 600. Memories 602 in one or more computing devices 600 in the computing device cluster 700 may store same instructions used to perform the file attribute setting method.

In some possible implementations, alternatively, memories 602 in one or more computing devices 600 in the computing device cluster 700 may separately store a part of instructions used to perform the file attribute setting method. In other words, a combination of the one or more computing devices 600 may jointly execute the instructions used to perform the file attribute setting method.

It should be noted that the memories 602 in different computing devices 600 in the computing device cluster 700 may store different instructions, and the different instructions are separately used to perform some functions of the foregoing file attribute setting apparatus. In other words, the instructions stored in the memories 602 in the different computing devices 600 may implement functions of one or more modules in a transceiver unit 501 and a processing unit 502.

In some possible implementations, the one or more computing devices 600 in the computing device cluster 700 may be connected over a network. The network may be a wide area network, a local area network, or the like.

In another embodiment of this application, a computer-readable storage medium is further provided. The computer-readable storage medium stores computer-executable instructions. When a processor of a device executes the computer-executable instructions, the device performs the method performed by a NAS server in the foregoing method embodiment.

In another embodiment of this application, a computer program product is further provided. The computer program product includes computer-executable instructions, and the computer-executable instructions are stored in a computer-readable storage medium. When a processor of a device executes the computer-executable instructions, the device performs the method performed by a NAS server in the foregoing method embodiment.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiment is merely an example. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A file attribute setting method, comprising:
receiving, by a network attached storage NAS server, an attribute setting request sent by a client, wherein the attribute setting request indicates a target directory and a target attribute, the target directory comprises a plurality of objects, and the objects are files or subdirectories;
performing, by the NAS server based on the attribute setting request, attribute setting on the plurality of objects in the target directory based on the target attribute, wherein the target attribute comprises one or more of the following: an owner attribute, a read-only attribute, a hidden attribute, a time attribute, or a permission attribute; and
sending, by the NAS server, a response message for the attribute setting request to the client.

2. The method according to claim 1, wherein:
a quantity of the objects on which attribute setting is performed based on the target attribute is less than a total quantity of objects in the target directory.

3. The method according to claim 1 or 2, wherein a setting manner of the attribute setting request is synchronous setting, and the method further comprises:
when the NAS server completes attribute setting for the plurality of objects in the target directory within setting time, indicating, by the response message, to the client, that attribute setting is completed.

4. The method according to claim 1 or 2, wherein a setting manner of the attribute setting request is synchronous setting, and the method further comprises:
when the NAS server does not complete attribute setting for the plurality of objects in the target directory within setting time, indicating, by the response message, an attribute setting exception to the client.

5. The method according to any one of claims 1 to 4, wherein the setting manner of the attribute setting request is synchronous setting, and when the NAS server does not complete attribute setting for the plurality of objects in the target directory within the setting time, the method further comprises:
sending, by the NAS server, a query response message to the client based on a synchronous query request sent by the client, wherein the synchronous query request is used to query for attribute setting results of the plurality of objects in the target directory.

6. The method according to claim 1 or 2, wherein a setting manner of the attribute setting request is asynchronous setting, and the response message indicates an attribute setting exception to the client.

7. The method according to any one of claims 1, 2, and 6, wherein the setting manner of the attribute setting request is asynchronous setting, and the method further comprises:
when the NAS server completes attribute setting for the plurality of objects in the target directory, actively sending, by the NAS server, an asynchronous message to the client, wherein the asynchronous message indicates, to the client, that attribute setting is completed.

8. The method according to any one of claims 1 to 7, wherein the method further comprises:
when a task session in which the attribute setting request is located is destroyed, stopping, by the NAS server, attribute setting for the plurality of objects in the target directory.

9. The method according to any one of claims 1 to 8, wherein the permission attribute comprises one or more of the following: read permission, write permission, delete permission, modify permission, and full control permission.

10. The method according to any one of claims 1 to 9, wherein the method further comprises:
receiving, by the NAS server over a network, the attribute setting request sent by the client.

11. A file attribute setting apparatus, comprising:
a transceiver unit, configured to receive an attribute setting request sent by a client, wherein the attribute setting request indicates a target directory and a target attribute, the target directory comprises a plurality of objects, and the objects are files or subdirectories; and
a processing unit, configured to perform, based on the attribute setting request, attribute setting on the plurality of objects in the target directory based on the target attribute, wherein the target attribute comprises one or more of the following: an owner attribute, a read-only attribute, a hidden attribute, a time attribute, and a permission attribute; wherein
the transceiver unit is further configured to send a response message for the attribute setting request to the client.

12. The apparatus according to claim 11, wherein:
a quantity of the objects on which attribute setting is performed based on the target attribute is less than a total quantity of objects in the target directory.

13. The apparatus according to claim 11 or 12, wherein a setting manner of the attribute setting request is synchronous setting, and when a NAS server completes attribute setting for the plurality of objects in the target directory within setting time, the response message indicates, to the client, that attribute setting is completed.

14. The apparatus according to claim 11 or 12, wherein a setting manner of the attribute setting request is synchronous setting, and when the NAS server does not complete attribute setting for the plurality of objects in the target directory within setting time, the response message indicates an attribute setting exception to the client.

15. The apparatus according to any one of claims 11 to 14, wherein the setting manner of the attribute setting request is synchronous setting, and when the NAS server does not complete attribute setting for the plurality of objects in the target directory within the setting time, the transceiver unit is further configured to:
send a query response message to the client based on a synchronous query request sent by the client, wherein the synchronous query request is used to query for attribute setting results of the plurality of objects in the target directory.

16. The apparatus according to claim 11 or 12, wherein a setting manner of the attribute setting request is asynchronous setting, and the response message indicates an attribute setting exception to the client.

17. The apparatus according to any one of claims **11,** 12, and 16, wherein the setting manner of the attribute setting request is asynchronous setting, and the transceiver unit is further configured to:
when the NAS server completes attribute setting for the plurality of objects in the target directory, actively send an asynchronous message to the client, wherein the asynchronous message indicates, to the client, that attribute setting is completed.

18. The apparatus according to any one of claims **11** to 17, wherein the processing unit is further configured to:
when a task session in which the attribute setting request is located is destroyed, stop attribute setting for the plurality of objects in the target directory.

19. The apparatus according to any one of claims 11 to 18, wherein the permission attribute comprises one or more of the following: read permission, write permission, delete permission, modify permission, and full control permission.

20. The apparatus according to any one of claims 11 to 19, wherein the transceiver unit is specifically configured to:
receive, over a network, the attribute setting request sent by the client.

21. A computing device, comprising a processor, wherein the processor is coupled to a memory, the processor is configured to store instructions, and when the instructions are executed by the processor, an electronic device is enabled to perform the method according to any one of claims 1 to 10.

22. A computing device cluster, comprising at least one computing device, wherein the computing device comprises a processor, the processor is coupled to a memory, the processor is configured to store instructions, and when the instructions are executed by the processor, the computing device cluster is enabled to perform the method according to any one of claims 1 to 10.

23. A computer-readable storage medium, storing instructions, wherein when the instructions are executed, a computer is enabled to perform the method according to any one of claims 1 to 10.

24. A computer program product, wherein the computer program product comprises instructions, and when the instructions are executed, a computer is enabled to implement the method according to any one of claims 1 to 10.
